(19) Europäisches Patentamt
European Patent Office
Office européen des brevets

(11) EP 4 559 955 A1

(12) EUROPEAN PATENT APPLICATION
published in accordance with Art. 153(4) EPC

(43) Date of publication:
**28.05.2025 Bulletin 2025/22**

(21) Application number: **23843164.7**

(22) Date of filing: **25.05.2023**

(51) International Patent Classification (IPC):
***C08J 5/22*** *(2006.01)* ***C08F 212/36*** *(2006.01)*
***C08F 8/30*** *(2006.01)* ***B01D 61/44*** *(2006.01)*
***B01D 61/42*** *(2006.01)* ***B01D 61/48*** *(2006.01)*
***H01M 8/1018*** *(2016.01)* ***H01M 8/1058*** *(2016.01)*
***H01M 8/1067*** *(2016.01)* ***H01M 8/1004*** *(2016.01)*

(52) Cooperative Patent Classification (CPC):
**B01D 61/42; B01D 61/44; B01D 61/48; C08F 8/30; C08F 212/36; C08J 5/22; H01M 8/1004; H01M 8/1018; H01M 8/1039; H01M 8/1058; H01M 8/1067**

(86) International application number:
**PCT/KR2023/007175**

(87) International publication number:
**WO 2024/019307 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.07.2022 KR 20220088463**

(71) Applicant: **Toray Advanced Materials Korea Inc.**
**Gumi-si, Gyeongsangbuk-do 39389 (KR)**

(72) Inventors:
- **CHOO, Jeong Joo**
  **Gumi-si, Gyeongsangbuk-do 39389 (KR)**
- **CHAR, Bong Jun**
  **Gumi-si, Gyeongsangbuk-do 39389 (KR)**
- **KIM, Ji Hwan**
  **Gumi-si, Gyeongsangbuk-do 39389 (KR)**

(74) Representative: **Mewburn Ellis LLP**
**Aurora Building**
**Counterslip**
**Bristol BS1 6BX (GB)**

# (54) ANION-EXCHANGE MEMBRANE AND MANUFACTURING METHOD THEREFOR

(57) Disclosed are an anion-exchange membrane and a manufacturing method therefor. The anion-exchange membrane may include: a porous polymer support composed of a membrane structure; and an anion-exchange polymer, wherein the anion-exchange polymer may be present on a surface and in pores of the porous polymer support, anion-exchange groups of the anion-exchange polymer may be uniformly distributed on the surface and in the pores of the porous polymer support, and the anion-exchange polymer may be a crosslinked product of a composition including a crosslinkable monomer represented by Formula 1:

[Formula 1]

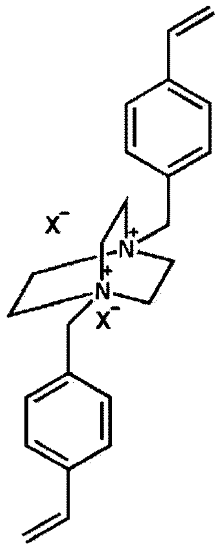

wherein $X^-$ is as disclosed in the specification.

FIG. 2

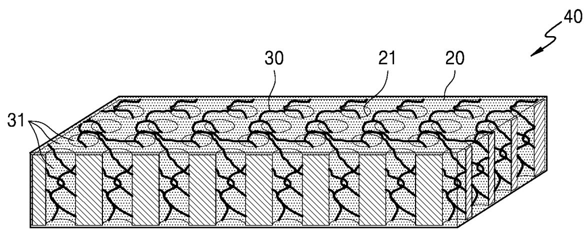

## Description

### Technical Field

The present disclosure relates to an anion-exchange membrane and a manufacturing method therefor.

### Background Art

An ion-exchange membrane refers to a synthetic resin membrane that selectively permits the passage of either cations or anions. Among these, an anion-exchange membrane is a synthetic resin membrane that selectively transmits anions by virtue of positively charged functional groups. Such anion-exchange membranes can be utilized in water treatment systems, including electrodialysis, bipolar membrane electrodialysis, capacitive deionization, and electrodeionization, or in systems such as fuel cells, water electrolysis, reverse electrodialysis, and redox flow batteries. In systems where anion-exchange membranes are employed, acid or alkaline raw water can be used in the process, and acid or alkali may be generated during the operation of the raw water process. While perfluorinated anion-exchange membranes can be used in such systems, their high cost often leads to the use of hydrocarbon-based anion-exchange membranes in actual systems. However, hydrocarbon-based anion-exchange membranes have limitations in terms of chemical resistance, restricting their applicability under certain processes and conditions. Additionally, since anion-exchange membranes inherently contain a certain proportion of support fraction, there is a limit to how much the ion exchange capacity can be increased to enhance membrane properties.

### Disclosure of Invention

### Technical Problem

One aspect is to provide an anion-exchange membrane with low sheet resistance, high ion exchange capacity, and excellent chemical resistance in the presence of highly concentrated acids and alkalines.

Another aspect is to provide a manufacturing method for the anion-exchange membrane.

### Solution to Problem

According to one aspect, provided is an anion-exchange membrane including:

a porous polymer support composed of a membrane structure; and
an anion-exchange polymer,
wherein the anion-exchange polymer is present on a surface and inside pores of the porous polymer support,
wherein anion-exchange groups of the anion-exchange polymer are uniformly distributed on the surface and inside the pores of the porous polymer support, and
wherein the anion-exchange polymer is a crosslinked product of a composition including a crosslinkable monomer represented by Formula 1:

[Formula 1]

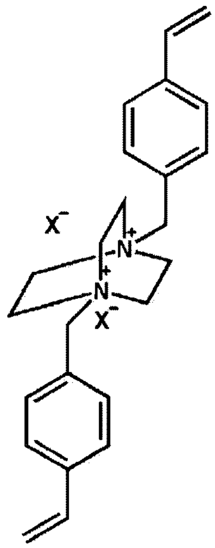

wherein, in the formula,
$X^-$ is $F^-$, $Cl^-$, $Br^-$, or $I^-$.

The membrane structure may have a structure in which pores are regularly arranged, or may have a three-dimensional network structure.

The membrane structure may have a porosity of 30 % to 80 %.

The membrane structure may include at least one polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone.

The porous polymer support may have a thickness of 10 μm to 110 μm.

The anion-exchange membrane may have an average thickness of 10 μm to 200 μm.

The anion-exchange membrane may have an ion exchange capacity of 1.5 meq/g or more.

The anion-exchange membrane may have a sheet resistance of 10 $\Omega \cdot cm^2$ or less.

The anion-exchange membrane may be used in electrodialysis, bipolar membrane electrodialysis, electrodeionization, capacitive deionization, or water electrolysis systems.

According to another aspect, provided is a manufacturing method for an anion-exchange membrane, the manufacturing method including:

providing a porous polymer support composed of a membrane structure;
preparing a composition for forming an anion-exchange polymer including a crosslinkable monomer represented by Formula 1, a photoinitiator, and a solvent;
impregnating the porous polymer support with the composition for forming an anion-exchange polymer to thereby fill a surface and pores of the porous polymer support with the composition;
pressing a polyester film onto at least one side of the porous polymer support filled with the composition to manufacture a laminate in which the polyester film and the porous polymer support are laminated;
irradiating light onto the laminate and subjecting the composition to a crosslinking reaction to form, on the surface and in the pores of the porous polymer support, an anion-exchange polymer that is a crosslinked product of the composition; and
separating the polyester film from the porous polymer support having the anion-exchange polymer formed on the surface and in the pores, to thereby manufacture an anion-exchange membrane.

[Formula 1]

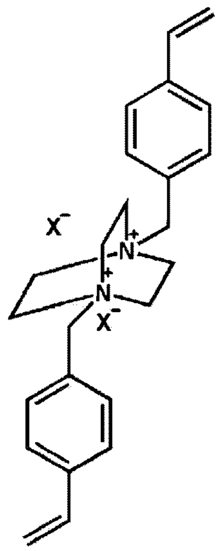

wherein, in the formula,
$X^-$ may be F-, Cl-, Br-, or I-.

The content of the crosslinkable monomer represented by Formula 1 may be 30 wt% to 70 wt% relative to 100 wt% of the composition for forming an anion-exchange polymer.
Prior to the impregnating of the porous polymer support with the composition for forming an anion-exchange polymer, the method may further include immersing the porous polymer support in a surfactant solution and drying the porous polymer support to thereby manufacture a porous polymer support having a hydrophilic surface.
The irradiating of the light may be performed using UVC as ultraviolet rays at a light intensity of 2,000 $mJ/cm^2$ to 10,000 $mJ/cm^2$.

## Advantageous Effects of Invention

An anion-exchange membrane according to one aspect is a membrane in which an anion-exchange polymer that is a crosslinked product of a composition including a crosslinkable monomer represented by Formula 1 is present on a surface and inside pores of a porous polymer support having a membrane structure, wherein anion-exchange groups of the anion-exchange polymer are uniformly distributed on the surface and in the pores of the porous polymer support.
The anion-exchange membrane can achieve high ion exchange capacity and low sheet resistance by increasing the content of the anion-exchange polymer within the membrane. Furthermore, the anion-exchange membrane due to having excellent chemical resistance can be used under highly concentrated acid and alkaline conditions.

## Brief Description of Drawings

FIG. 1 is a conceptual diagram of a general anion-exchange membrane.
FIG. 2 is a schematic diagram of an anion-exchange membrane according to an embodiment.
FIG. 3 is a scanning electron microscopy (SEM) image showing a structure of a porous polymer support used in an anion-exchange membrane manufactured in Example 1.
FIG. 4 is a schematic flowchart of a manufacturing method for an anion-exchange membrane according to an embodiment.

## Best Mode for Carrying out the Invention

## Mode for the Invention

Hereinbelow, an anion-exchange membrane and a manufacturing method therefor will be described in greater detail with reference to the examples and drawings of the present disclosure. The following examples are for illustrative purposes only to describe the present disclosure in greater detail, and it will be apparent to those skilled in the art that these

examples should not be construed as limiting the scope of the present disclosure.

Unless otherwise defined, all technical and scientific terms used herein have the same meaning as commonly understood by one of ordinary skill in the art to which the present application belongs. In the case of any inconsistencies, the present disclosure, including any definitions therein shall prevail. Methods and materials similar or equivalent to those described herein may be used in implementation or testing of the present disclosure, but suitable methods and materials are described herein. The terms "comprise(s)" and "include(s)" and/or "comprising" and "including" as used herein, unless otherwise specified, does not preclude the presence or addition of one or more other elements. As used herein, the term "a combination thereof" refers to a mixture or combination of one or more of the described components. As used herein, the term "and/or" includes any and all combinations of one or more of the associated listed items. The term "or" as used herein means "and/or". Expressions such as "at least one of," as used herein, when preceding a list of elements, modify the entire list of elements and do not modify the individual elements of the list. In the present specification, when one component is described as being "on" or "above" another component, the component may be directly on the other component or intervening components may be present between the component and the other component. On the other hand, when one component is described as being "directly on" or "directly above" another component, there may be no intervening components therebetween. In the present specification, "-based resin", "-based polymer", or/and "-based copolymer" are used in a broad sense to encompass "- resin", "- polymer", "-based polymer", "- copolymer", or/and "- derivatives of resins, polymers, or copolymers". As used herein, the term "polymer or copolymer crosslinked with these resins" refers to "polymer or copolymer crosslinked with the aforementioned resins".

FIG. 1 is a conceptual diagram of a general anion-exchange membrane.

Referring to FIG. 1, an anion-exchange membrane 10 may have an anion-exchange polymer backbone 2 with cationic functional groups 1 arranged on a support 5. When counter anions 3 and co-cations 4 permeate from left to right through the anion-exchange membrane 10, the counter anions 3 are selectively transmitted.

Generally, the anion-exchange membrane 10 is required to have high permeation selectivity, low electrical resistance, excellent mechanical strength, and high chemical stability. The materials for anion-exchange membranes 10 include perfluorinated anion-exchange membranes and hydrocarbon-based anion-exchange membranes. Among these, hydrocarbon-based anion-exchange membranes have superior price competitiveness but have limitations in applicable processes and conditions due to their poor chemical resistance. Additionally, hydrocarbon-based anion-exchange membranes contain a certain portion of support fraction, limiting the increase in ion exchange capacity for enhancing membrane performance.

Based on these points, the inventors of the present invention propose the following anion-exchange membrane and manufacturing method therefor.

An anion-exchange membrane according to an embodiment may include: a porous polymer support composed of a membrane structure; and an anion-exchange polymer, wherein the anion-exchange polymer may be present on a surface and in pores of the porous polymer support, anion-exchange groups of the anion-exchange polymer may be uniformly distributed on the surface and in the pores of the porous polymer support, and the anion-exchange polymer may be a crosslinked product of a composition including a crosslinkable monomer represented by Formula 1:

[Formula 1]

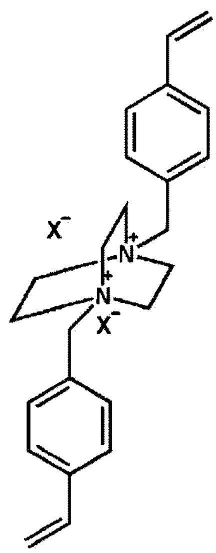

wherein, in the formula,
$X^-$ may be $F^-$, $Cl^-$, $Br^-$, or $I^-$.

The anion-exchange membrane according to an embodiment may achieve high ion exchange capacity and low sheet resistance by increasing the content of the anion-exchange polymer within the membrane. Furthermore, the anion-exchange membrane due to having excellent chemical resistance may be used in highly concentrated acid and alkaline conditions.

FIG. 2 is a schematic diagram of an anion-exchange membrane according to an embodiment.

Referring to FIG. 2, an anion-exchange membrane 40 according to an embodiment may have an anion-exchange polymer 31, having cationic functional groups, present on a surface and in pores 21 of a porous polymer support 20. Since the anion-exchange polymer 31 with cationic functional groups are uniformly distributed on the surface and in the pores 21 of the porous polymer support 20, a homogeneous anion-exchange membrane 40 may be obtained. Such a structure of the anion-exchange membrane 40 may achieve low sheet resistance and high ionic conductivity. In addition, the porous polymer support 20 may enhance mechanical durability and have high dimensional stability.

The anion-exchange polymer may be a crosslinked product of a composition including a crosslinkable monomer represented by Formula 1. The crosslinkable monomer represented by Formula 1 is a monomer in which two vinylbenzyl chlorides are crosslinked to a bi-functional cyclic diamine containing pendant chains having quaternary ammonium cationic groups attached thereto. The crosslinkable monomer represented by Formula 1 may form a rigid cage structure and thus maintain chemical stability while providing enhanced ion exchange capacity even under conditions of highly concentrated acids or bases. Consequently, the anion-exchange membrane containing such an anion-exchange polymer may exhibit excellent concentration and desalination performance. The term "crosslinked product" refers to cured products of compositions containing the crosslinkable monomer represented by Formula 1, as well as initial reaction products, reaction intermediates, final products, and the like.

The membrane structure may be a structure in which pores are regularly arranged, or may be a three-dimensional network structure. Such structures of the membrane structure may be identified through FIG. 3 described below. For example, the membrane structure may be formed by mixing polymeric materials with low-molecular-weight wax, extruding the mixture into a film at high temperature, and extracting the wax with a solvent to form a microporous structure, or may be formed without using wax, by creating pore structures through uniaxial or biaxial stretching and heat treatment processes. However, without being limited to aforementioned methods, the membrane structure may be formed using any forming method available in the art.

The membrane structure may have a porosity of 30 % to 80 %. For example, the membrane structure may have a porosity of 35 % to 70 %, or 40 % to 65 %, or 45 % to 60 %, or 45 % to 55 %. If the pore size and/or porosity of the membrane structure is less than 30 %, it may become difficult to achieve improvement in physical durability and mechanical strength of the anion-exchange membrane intended to be obtained using the porous polymer support. If the pore size and/or porosity of the membrane structure exceeds 80 %, the fraction occupied by the porous polymer support within the anion-exchange membrane becomes excessive, potentially leading to increased sheet resistance and decreased ion exchange capacity.

The membrane structure may include at least one polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone. For example, the membrane structure may be of polyethylene or polypropylene. For example, the membrane structure may be of polypropylene.

The porous polymer support may have a thickness of 10 μm to 110 μm. For example, the porous polymer support may have a thickness of 20 μm to 110 μm, 40 μm to 110 μm, or 60 μm to 110 μm. With the porous polymer support having a thickness within the aforementioned ranges, sheet resistance may decrease, and ion exchange capacity may increase.

The anion-exchange membrane may have an average thickness of 10 μm to 200 μm. For example, the anion-exchange membrane may have an average thickness of 12 μm to 150 μm. If the average thickness of the anion-exchange membrane is less than 10 μm, the physical durability and handling properties of the anion-exchange membrane may deteriorate, risking membrane damage during module assembly or during operation after system application, and system operating performance may deteriorate due to unnecessary ion permeation. If the average thickness of the anion-exchange membrane exceeds 200 μm, the sheet resistance increases, leading to higher power consumption required for operation when implemented in systems and other applications, and the system operating performance may deteriorate.

The anion-exchange membrane may have an ion exchange capacity of 1.5 meq/g or more. For example, the anion-exchange membrane may have an ion exchange capacity of 1.6 meq/g or more, 1.7 meq/g or more, 1.8 meq/g or more, 1.9 meq/g or more, 2.0 meq/g or more, 2.1 meq/g or more, 2.2 meq/g or more, 2.3 meq/g or more, or 2.4 meq/g or more.

The anion-exchange membrane may have a sheet resistance of 10 $\Omega \cdot cm^2$ or less. For example, the anion-exchange membrane may have a sheet resistance of 9.9 $\Omega \cdot cm^2$ or less, 9.8 $\Omega \cdot cm^2$ or less, 9.7 $\Omega \cdot cm^2$ or less, 9.6 $\Omega \cdot cm^2$ or less, 9.0 $\Omega \cdot cm^2$ or less, 8.5 $\Omega \cdot cm^2$ or less, 8.0 $\Omega \cdot cm^2$ or less, 7.8 $\Omega \cdot cm^2$ or less, 7.6 $\Omega \cdot cm^2$ or less, 7.2 $\Omega \cdot cm^2$ or less, 6.5 $\Omega \cdot cm^2$ or less, 6.0 $\Omega \cdot cm^2$ or less, 5.0 $\Omega \cdot cm^2$ or less, 4.0 $\Omega \cdot cm^2$ or less, or 3.0 $\Omega \cdot cm^2$ or less.

The anion-exchange membrane may be used in electrodialysis, bipolar membrane electrodialysis, electrodeionization, capacitive deionization, or water electrolysis systems. The anion-exchange membrane may exhibit excellent concentration and desalination performance.

A manufacturing method for an anion-exchange membrane according to another embodiment may include: providing a porous polymer support composed of a membrane structure; preparing a composition for forming an anion-exchange polymer including a crosslinkable monomer represented by Formula 1, a photoinitiator, and a solvent; impregnating the porous polymer support with the composition for forming an anion-exchange polymer, thereby filling a surface and pores of the porous polymer support with the composition; pressing a polyester film onto at least one side of the porous polymer support filled with the composition to thereby manufacture a laminate in which the polyester film and the porous polymer support are laminated; irradiating light onto the laminate and subjecting the composition to a crosslinking reaction to form, on the surface and in the pores of the porous polymer support, an anion-exchange polymer that is a crosslinked product of the composition; and separating the polyester film from the porous polymer support having the anion-exchange polymer formed on the surface and in the pores, to thereby manufacture an anion-exchange membrane:

[Formula 1]

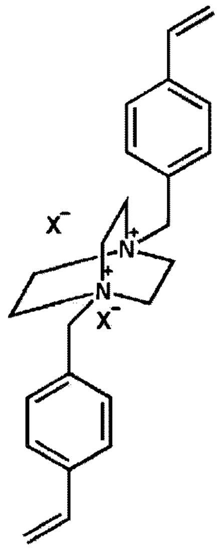

wherein, in the formula,
$X^-$ may be $F^-$, $Cl^-$, $Br^-$, or $I^-$.

The manufacturing method for an anion-exchange membrane may provide an anion-exchange membrane with low sheet resistance, high ion exchange capacity, and excellent chemical resistance under highly concentrated acid and alkaline conditions.

FIG. 4 is a schematic flowchart of a manufacturing method for an anion-exchange membrane according to an embodiment.

Referring to FIG. 4, first, a porous polymer support composed of a membrane structure may be provided (S1).

The membrane structure may have a porosity of 30 % to 80 %. For example, the membrane structure may have a porosity of 35 % to 70 %, or 40 % to 65 %, or 45 % to 60 %, or 45 % to 55 %. If the pore size and/or porosity of the membrane structure is less than 30 %, it may become difficult to achieve improvement in physical durability and mechanical strength of the anion-exchange membrane intended to be obtained using the porous polymer support. If the pore size and/or porosity of the membrane structure exceeds 80 %, the fraction occupied by the porous polymer support within the anion-exchange membrane becomes excessive, leading to increased sheet resistance and decreased ion exchange capacity.

The membrane structure may include at least one polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone. For example, the membrane structure may be materials of polyethylene or polypropylene. For example, the membrane structure may be materials of polypropylene.

The porous polymer support may have a thickness of 10 μm to 110 μm. For example, the porous polymer support

may have a thickness of 20 μm to 110 μm, 40 μm to 110 μm, or 60 μm to 110 μm. With the porous polymer support having a thickness within the aforementioned ranges, sheet resistance may decrease, and ion exchange capacity may increase.

The membrane structure due to having hydrophobic characteristics, may not achieve sufficient wettability with the anion-exchange polymer, potentially failing to achieve intended membrane performance.

To compensate for the foregoing, prior to impregnating the porous polymer support with the composition for forming an anion-exchange polymer, an additional process may be included wherein the porous polymer support is immersed in a surfactant solution and then dried to manufacture a porous polymer support having a hydrophilic surface. While any surfactant capable of hydrophilization in the art may be used without limitation, for example, one or more materials selected from dodecyl benzenesulfonic acid (DBSA), alkyl benzenesulfonic acid (ABS), linear alkylbenzenesulfonic acid (LAS), alphasulfonic acid (AS), alpha-olefin sulfonic acid (AOS), alcohol polyoxyethylene ether (AE), and alcohol polyoxyethylene ether sulfonic acid (AES) may be utilized. For example, dodecyl benzenesulfonic acid may be used as the surfactant. As the hydrophobic moiety of the surfactant binds to the hydrophobic surface of the porous polymer support through hydrophobic-hydrophobic interaction, the hydrophilic moiety of the surfactant becomes exposed on the surface of the porous polymer support, replacing its hydrophobic properties and enabling hydrophilization. During this process, the surfactant may hydrophilize not only the outer surface but also the internal pore surfaces of the porous polymer support. However, this process may be omitted if the degree of hydrophilization of the porous polymer support is sufficient, or if the pores of the porous polymer support are large enough to allow filling of the composition for forming an anion-exchange polymer.

The surfactant solution may contain 0.001 wt% to 6 wt% of a surfactant and the balance of solvent. For example, the surfactant solution may include 0.01 wt% to 4 wt% of a surfactant and the balance of solvent, or may include 0.05 wt% to 3 wt% of a surfactant and the balance of solvent. If the surfactant included in the surfactant solution is less than 0.001 wt% of concentration, the surface of the porous polymer support may not be hydrophilized, potentially preventing the composition for forming an anion-exchange polymer from filling the pores of the porous polymer support. If the surfactant included in the surfactant solution exceeds 6 wt% of concentration, the surfactant may elute or the filling amount of composition for forming an anion-exchange polymer may decrease.

The immersion may be performed for 0.1 minutes to 10 minutes, for example, 0.5 minutes to 5 minutes. If the immersion time is less than 0.1 minutes, the surface of the porous polymer support may not be sufficiently hydrophilized, preventing the composition for forming an anion-exchange polymer from filling the pores of the porous polymer support. If the immersion time exceeds 10 minutes, production rate may decrease and production costs may increase. The drying may be performed at a temperature of 40 °C to 90 °C for 1 minute to 20 minutes. For example, the drying may be performed at a temperature of 40 °C to 80 °C for 1 minute to 10 minutes.

Next, a composition for forming an anion-exchange polymer including the crosslinkable monomer represented by Formula 1, a photoinitiator, and a solvent may be prepared (S2).

The crosslinkable monomer represented by Formula 1 is a monomer in which two vinylbenzyl chlorides are crosslinked to a bi-functional cyclic diamine containing pendant chains having quaternary ammonium cationic groups attached thereto. The crosslinkable monomer represented by Formula 1 may form a rigid cage structure and thus maintain chemical stability while providing enhanced ion exchange capacity even under conditions of highly concentrated acids or bases. Consequently, the anion-exchange membrane containing such an anion-exchange polymer may exhibit excellent concentration and desalination performance. The term "crosslinked product" refers to cured products of compositions containing the crosslinkable monomer represented by Formula 1, as well as initial reaction products, reaction intermediates, final products, and the like thereof. The content of the crosslinkable monomer represented by Formula 1 may be 30 wt% to 70 wt% relative to 100 wt% of the composition for forming an anion-exchange polymer.

The content of the photoinitiator may be from 0.01 wt% to 2 wt%, or from 0.1 wt% to 1 wt%, relative to 100 wt% of the anion-exchange polymer-forming composition. While any photoinitiator available in the art may be used, the photoinitiator may be, for example, 2-hydroxy-2-methylpropiophenone. While any solvent available in the art and may be used, the solvent may be, for example, a water-soluble solvent such as water, methanol or ethanol, and may be distilled water. The solvent may be included as the balance of the composition for forming an anion-exchange polymer, excluding the crosslinkable monomer represented by Formula 1 and the photoinitiator.

Next, the porous polymer support may be impregnated with the composition for forming an anion-exchange polymer to fill the surface and pores of the porous polymer support with the composition (S3). The impregnation may be performed for 0.1 minutes to 10 minutes, and for example, may be performed for 0.5 minutes to 5 minutes. If the impregnation is performed for less than 0.1 minutes, the composition for forming an anion-exchange polymer may not sufficiently fill the pores of the porous polymer support, leading to decreased membrane performance or leakage. If the impregnation is performed for more than 10 minutes, the production rate may decrease and the production cost may increase. Through this impregnation, the composition for forming an anion-exchange polymer may fill the pores of the porous polymer support, and the composition for forming an anion-exchange polymer may envelop the outer surface of the porous polymer support.

Next, a polyester film may be pressed onto at least one side of the porous polymer support filled with the

composition to manufacture a laminate in which the polyester film and the porous polymer support are laminated (S4).

The polyester film may be pressed onto the upper and/or lower surfaces of the porous polymer support through roll calendering. The polyester film may be, for example, a polyethylene terephthalate film. The polyester film may have a thickness of 10 μm to 150 μm, for example, 20 μm to 120 μm, or 30 μm to 100 μm. If the thickness of the polyester film is less than 10 μm, lamination defects such as film wrinkles may occur during lamination with the support filled with anion-exchange polymer. If the thickness of the polyester film exceeds 150 μm, during the crosslinking reaction described below, the film may be too thick for the light to be sufficiently irradiated on the porous polymer support, resulting in an insufficient crosslinking reaction. The polyester film may be untreated or release-treated on one surface that is in contact with the porous polymer support. By using such a film, it may be possible to interfere with bonding to the porous polymer support having a hydrophilic surface, thereby preventing the anion-exchange polymer from being removed from the support surface. The pressing may be performed at a temperature of 10 °C to 35 °C, for example, 15 °C to 30 °C, under a pressure of about 0 bar to 5 bar. The pressure may be appropriately adjusted in consideration of the thickness of the porous polymer support and the thickness of the polyester film.

Next, light may be irradiated on the laminate, and the composition may be crosslinked to form, on the surface and inside the pores of the porous polymer support, an anion-exchange polymer that is a crosslinked product of the composition (S5).

The light may be ultraviolet light and may be, for example, UVA, UVB, UVC or/and UVV. For example, the light irradiation may be performed using UVC as ultraviolet light at a dose of 2,000 $mJ/cm^2$ to 10,000 $mJ/cm^2$, for example, at a dose of 2,000 $mJ/cm^2$ to 8,000 $mJ/cm^2$. If the irradiated ultraviolet light has light intensity and irradiation time below the aforementioned range, the crosslinking reaction of the composition for forming an anion-exchange polymer may not proceed efficiently, and if the irradiated ultraviolet light has light intensity and irradiation time above the aforementioned range, the energy may become too strong, causing melting or carbonization of the porous polymer support and polyester film.

Finally, the polyester film may be separated from the porous polymer support having the anion-exchange polymer formed on the surface and in the pores to thereby manufacture an anion-exchange membrane (S6). The separation may be performed by pulling the polyester film attached to the porous polymer support in opposite directions using separation rolls.

Hereinbelow, the present disclosure will be described in greater detail with reference to the examples and comparative examples. However, the following examples are provided only to illustrate the present disclosure, and it will become apparent that these examples are not intended to limit the scope of the present disclosure.

[Examples]

**Example 1: Manufacture of Anion-Exchange Membrane**

A 60 μm-thick polypropylene porous polymer support (porosity: 55 %) was prepared.

Separately, a 4-vinylbenzyl chloride solution dissolved in methanol was added to a 1,4-diazabicyclo[2,2,2]octane solution dissolved in methanol such that the molar ratio of vinylbenzyl chloride to 1,4-diazabicyclo[2,2,2]octane become 2 : 1. The mixture was then stirred at room temperature under inert atmosphere. The mixture was filtered and washed with methanol, then dried under vacuum at room temperature to obtain a crosslinkable monomer represented by Formula 1.

66 wt% of the crosslinkable monomer represented by Formula 1, 0.6 wt% of 2-hydroxy-2-methylpropiophenone (manufactured by Ciba) as a photoinitiator, and the balance of distilled water were mixed to prepare a composition for forming an anion-exchange polymer totaling 100 wt%.

The polypropylene porous polymer support was impregnated with the composition for forming an anion-exchange polymer, thereby filling the surface and pores of the porous polymer support. The porous polymer support filled with the composition was fed into press rolls, and a 50 μm-thick polyester film was pressed onto the upper and lower surfaces of the porous polymer support at room temperature to manufacture a laminate in which the polyester film and the porous polymer support are laminated. The laminate was irradiated with UVC as ultraviolet light at a light intensity of 3,000 $mJ/cm^2$ to form an anion-exchange polymer, which is a crosslinked product of the composition, on the surface and in the pores of the porous polymer support. The polyester film was then separated from the porous polymer support having the anion-exchange polymer formed on the surface and in the pores to thereby manufacture an anion-exchange membrane.

[Formula 1]

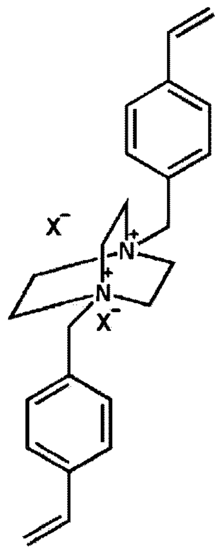

wherein, in the formula, $X^-$ is $Cl^-$.

**Example 2: Manufacture of Anion-Exchange Membrane**

An anion-exchange membrane was manufactured using the same method as Example 1, except that an 80 μm-thick polypropylene porous polymer support (porosity: 45 %) was used.

**Example 3: Manufacture of Anion-Exchange Membrane**

An anion-exchange membrane was manufactured using the same method as Example 1, except that a 110 μm-thick polypropylene porous polymer support (porosity: 48 %) was used.

**Comparative Example 1: Manufacture of Anion-Exchange Membrane**

An anion-exchange membrane was manufactured using the same method as Example 1, except that a 120 μm-thick polypropylene porous polymer support (porosity: 28 %) was used.

**Comparative Example 2: Manufacture of Anion-Exchange Membrane**

An anion-exchange membrane was manufactured using the same method as Example 1, except that a 60 μm-thick cellulose acetate nonwoven-type support (porosity: 75 %) was used.

**Comparative Example 3: Manufacture of Anion-Exchange Membrane**

An anion-exchange membrane was manufactured using the same method as Example 1, except that a 20 μm-thick polyethylene/polypropylene mesh-type support (porosity: 84 %) was used.

**Comparative Example 4: Manufacture of Anion-Exchange Membrane**

An anion-exchange membrane was manufactured using the same method as Example 1, except that an 8 μm-thick polyethylene porous polymer support (porosity: 44 %) was used.

**Comparative Example 5: Manufacture of Anion-Exchange Membrane**

An anion-exchange membrane was manufactured using the same method as Example 1, except that a composition for forming an anion-exchange polymer totaling 100 wt%, which was prepared by mixing 42 wt% of (3-acrylamidopropyl)trimethylammonium chloride (manufactured by TCI), 14 wt% of N,N'-methylenebisacrylamide (manufactured by Merck), 0.6 wt% of 2-hydroxy-2-methylpropiophenone (manufactured by Ciba) as photoinitiator, and the balance of distilled water.

**Analysis Example 1: Scanning Electron Microscopy (SEM) Images**

The structure of the porous polymer support in the anion-exchange membrane manufactured in Example 1 was observed at x30K magnification using scanning electron microscopy (SEM). A Hitachi S-5500 scanning electron microscope was used. The results are shown in FIG. 3.

Referring to FIG. 3, the porous polymer support of the anion-exchange membrane manufactured in Example 1 was confirmed to have a three-dimensional network structure.

**Evaluation Example 1: Electrochemical Property Evaluation**

The electrochemical properties of each anion-exchange membrane manufactured in Examples 1 to 3 and Comparative Examples 1 to 5 were evaluated as follows. The results are shown in Table 1 below.

(1) Sheet Resistance ($\Omega \cdot cm^2$)

Each anion-exchange membrane was cut to a size of 5 cm x 5 cm to prepare samples. The samples were immersed in 0.5 M NaCl aqueous solution for 24 hours. The samples were positioned between electrodes for sheet resistance measurement. Using an LCR meter (E4908A, manufactured by Agilent), the wire resistance ($R_1$) of the anion-exchange membrane and the resistance ($R_2$) of 0.5 M NaCl aqueous solution were measured. The sheet resistance (Rm) was calculated by applying the measured resistance values ($R_1$, $R_2$) to Equation 1 below. The results are shown in Table 1.

[Equation 1]

$$Rm(\Omega \cdot cm^2) = (R_1 - R_2) \times S$$

wherein, in the equation,
Rm is the sheet resistance of the anion-exchange membrane,
$R_1$ is the wire resistance of the anion-exchange membrane,
$R_2$ is the resistance of 0.5 M NaCl aqueous solution, and
S is the electrode area.

(2) Ion exchange capacity (IEC, meq/g)

Each anion-exchange membrane was cut to a size of 5 cm x 5 cm to prepare samples. The samples were washed with distilled water and excess moisture was removed with tissue. 70 ml of 1 M NaCl solution was added to a vial, and the moisture-removed sample was immersed in the 1 M NaCl solution for 12 hours or more for primary pretreatment. Then, the samples after a first pretreatment were washed several times with distilled water and excess moisture was removed with tissue. 70 ml of 0.5 M $Na_2CO_3$ solution was added to a vial, and the moisture-removed sample was immersed in the 0.5 M $Na_2CO_3$ solution for 12 hours or more for a second pretreatment. Then, the sample after a second pretreatment was removed from the vial, and the remaining solution was titrated with 0.01 M $AgNO_3$ solution while recording the volume of AgNOs solution used. The sample was washed several times with distilled water and dried in an 80 °C hot-air oven for 15 minutes. After drying was completed, the weight of the dried anion-exchange membrane was measured. The IEC was calculated by applying the measured weight of the dried anion-exchange membrane to Equation 2 below. The results are shown in Table 1.

$$\text{IEC (meq/g)} = (\text{Titrant reagent volume (ml)} \times 0.01)/\text{Weight of dried anion- exchange membrane (g)} \quad \text{[Equation 2]}$$

(3) Chemical Resistance

The anion-exchange membranes manufactured in Example 1 and Comparative Example 5 were cut to a size of 5 cm x 5 cm to prepare samples. The samples were immersed in 1 M NaOH aqueous solution and 0.5 M $H_2SO_4$ aqueous solution, respectively, and their sheet resistance was measured for each immersion time (days) using the same method as (1) Sheet Resistance ($\Omega \cdot cm^2$). The results are shown in Tables 2 and 3.

[Table 1]

| | Support material | Support porosity (%) | Support thickness (μm) | Sheet resistance (Ω·$cm^2$) | IEC (meq/g) |
|---|---|---|---|---|---|
| Example 1 | Polypropylene | 55 | 60 | 3.0 | 2.4 |
| Example 2 | Polypropylene | 45 | 80 | 7.6 | 1.8 |
| Example 3 | Polypropylene | 48 | 110 | 9.6 | 1.8 |
| Comparative Example 1 | Polypropylene | 28 | 120 | 19.8 | 1.0 |
| Comparative Example 2 | Cellulose acetate | 75 | 60 | 2.4 | 1.9 |
| Comparative Example 3 | Polyethylene/Polypropylene | 84 | 20 | 0.6 | 2.7 |
| Comparative Example 4 | Polyethylene | 44 | 8 | 0.3 | 2.8 |
| Comparative Example 5 | Polypropylene | 55 | 60 | 4.5 | 1.0 |

Referring to Table 1, the porous polymer supports of the anion-exchange membranes manufactured in Examples 1 to 3 are polypropylene membranes with a porosity of 48 % to 55 % and a thickness of 60 μm to 110 μm. The porous polymer support of the anion-exchange membrane manufactured in Comparative Example 1 is a polypropylene membrane with a porosity of 28 % and a thickness of 120 μm. The anion-exchange membranes manufactured in Examples 1 to 3 showed a decreased sheet resistance of 9.6 Ω·$cm^2$ or less and an improved IEC of 1.8 meq/g or higher, compared to the anion-exchange membrane manufactured in Comparative Example 1.

The porous polymer support of the anion-exchange membrane manufactured in Comparative Example 2 is a cellulose acetate nonwoven-type support with a thickness of 60 μm and a porosity of 75 %. The anion-exchange membrane manufactured in Comparative Example 2 was subjected to concentration in an electrodialysis system using 15 wt% NaCl aqueous solution as raw water, but failed to achieve concentration.

The porous polymer support of the anion-exchange membrane manufactured in Comparative Example 3 is a polyethylene/polypropylene porous polymer support with a thickness of 20 μm and a porosity of 84 %. The anion-exchange membrane manufactured in Comparative Example 3 was subjected to concentration in an electrodialysis system using 15 wt% NaCl aqueous solution as raw water, but failed to achieve concentration.

The porous polymer support of the anion-exchange membrane manufactured in Comparative Example 4 is a polyethylene porous polymer support with a thickness of 8 μm and a porosity of 44 %. The anion-exchange membrane manufactured in Comparative Example 4 could not be assembled into modules due to its excessive thinness.

[Table 2]

| Immersion time (days) | 0 | 13 | 28 | 40 |
|---|---|---|---|---|
| 1 M NaOH aqueous solution | 3.0 | 3.1 | 3.1 | 3.2 |
| 0.5 M $H_2SO_4$ aqueous solution | 2.9 | 2.9 | 2.8 | 2.8 |

[Table 3]

| Immersion time (days) | 0 | 13 | 28 | 40 |
|---|---|---|---|---|
| 1 M NaOH aqueous solution | 4.4 | 2.8 | 2.7 | 2.6 |
| 0.5 M $H_2SO_4$ aqueous solution | 4.5 | 4.1 | 4.0 | 4.0 |

Tables 2 and 3 show the sheet resistance measurements over immersion time for the anion-exchange membrane manufactured in Example 1 and the anion-exchange membrane manufactured in Comparative Example 5, respectively, when immersed in 1 M NaOH aqueous solution and 0.5 M $H_2SO_4$ aqueous solution. Referring to Table 2, the anion-exchange membrane manufactured in Example 1 showed sheet resistance changes of about 6.7 % and 3 % after 40 days of immersion in 1 M NaOH aqueous solution and 0.5 M $H_2SO_4$ aqueous solution, respectively. Referring to Table 3, the anion-exchange membrane manufactured in Comparative Example 5 showed sheet resistance changes of about 41 % and 11 % after 40 days of immersion in 1 M NaOH aqueous solution and 0.5 M $H_2SO_4$ aqueous solution, respectively.

Therefore, the anion-exchange membrane manufactured in Example 1 was confirmed to exhibit excellent

chemical resistance compared to the anion-exchange membrane manufactured in Comparative Example 5, as demonstrated by smaller changes in sheet resistance after 40 days of immersion in 1 M NaOH aqueous solution and 0.5 M $H_2SO_4$ aqueous solution.

From these results, it can be seen that the anion-exchange membranes prepared in Examples 1 to 3 are suitable for use in electrodialysis, bipolar membrane electrodialysis, electrodeionization, capacitive deionization, or water electrolysis systems.

## Claims

1. An anion-exchange membrane comprising:

    a porous polymer support composed of a membrane structure; and
    an anion-exchange polymer,
    wherein the anion-exchange polymer is present on a surface and in pores of the porous polymer support,
    wherein anion-exchange groups of the anion-exchange polymer are uniformly distributed on the surface and in the pores of the porous polymer support, and
    wherein the anion-exchange polymer is a crosslinked product of a composition comprising a crosslinkable monomer represented by Formula 1:

    [Formula 1]

    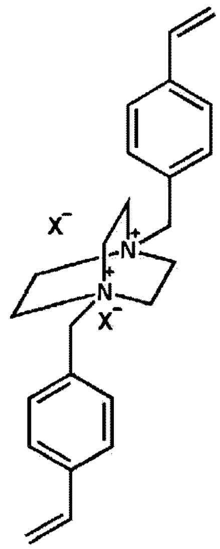

    wherein, in the formula,
    $X^-$ is $F^-$, $Cl^-$, $Br^-$, or $I^-$.

2. The anion-exchange membrane of claim 1,
wherein the membrane structure has a structure in which pores are regularly arranged, or has a three-dimensional network structure.

3. The anion-exchange membrane of claim 1,
wherein the membrane structure has a porosity of 30 % to 80 %.

4. The anion-exchange membrane of claim 1,
wherein the membrane structure comprises at least one polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone.

5. The anion-exchange membrane of claim 1,
wherein the porous polymer support has a thickness of 10 μm to 110 μm.

**6.** The anion-exchange membrane of claim 1, wherein the anion-exchange membrane has an average thickness of 10 μm to 200 μm.

**7.** The anion-exchange membrane of claim 1, wherein the anion-exchange membrane has an ion exchange capacity of 1.5 meq/g or more.

**8.** The anion-exchange membrane of claim 1, wherein the anion-exchange membrane has a sheet resistance of 10 $\Omega \cdot cm^2$ or less.

**9.** The anion-exchange membrane of claim 1, wherein the anion-exchange membrane is used for electrodialysis, bipolar membrane electrodialysis, electrodeionization, capacitive deionization, or water electrolysis.

**10.** A manufacturing method for an anion-exchange membrane, the manufacturing method comprising:

providing a porous polymer support composed of a membrane structure;
preparing a composition for forming an anion-exchange polymer comprising a crosslinkable monomer represented by Formula 1, a photoinitiator, and a solvent;
impregnating the porous polymer support with the composition for forming an anion-exchange polymer, to thereby fill a surface and pores of the porous polymer support with the composition;
pressing a polyester film onto at least one side of the porous polymer support filled with the composition to thereby prepare a laminate in which the polyester film and the porous polymer support are laminated;
irradiating light onto the laminate and subjecting the composition to a crosslinking reaction to form, on the surface and in the pores of the porous polymer support, an anion-exchange polymer that is a crosslinked product of the composition; and
separating the polyester film from the porous polymer support having the anion-exchange polymer formed on the surface and in the pores, to thereby prepare an anion-exchange membrane:

[Formula 1]

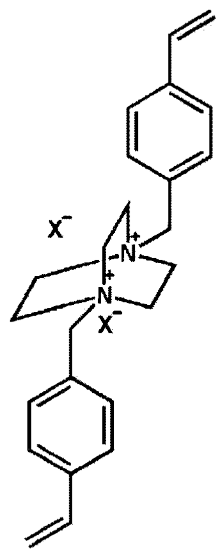

wherein in the formula,
$X^-$ is $F^-$, $Cl^-$, $Br^-$, or $I^-$.

**11.** The manufacturing method of claim 10, wherein a content of the crosslinkable monomer represented by Formula 1 is from 30 wt% to 70 wt% relative to 100 wt% of the composition for forming an anion-exchange polymer.

**12.** The manufacturing method of claim 10, wherein the membrane structure has a porosity of 30 % to 80 %.

**13.** The manufacturing method of claim 10,
wherein the membrane structure comprises at least one polymer selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone.

**14.** The manufacturing method of claim 10,
wherein the porous polymer support has a thickness of 10 μm to 110 μm.

**15.** The manufacturing method of claim 10, further comprising,
before impregnating the porous polymer support with the composition for forming an anion-exchange polymer, immersing the porous polymer support in a surfactant solution and drying the porous polymer support to thereby prepare a porous polymer support having a hydrophilic surface.

**16.** The manufacturing method of claim 10,
wherein the irradiation with light is performed using UVC as ultraviolet rays at a light intensity of 2,000 $mJ/cm^2$ to 10,000 $mJ/cm^2$.

FIG. 1

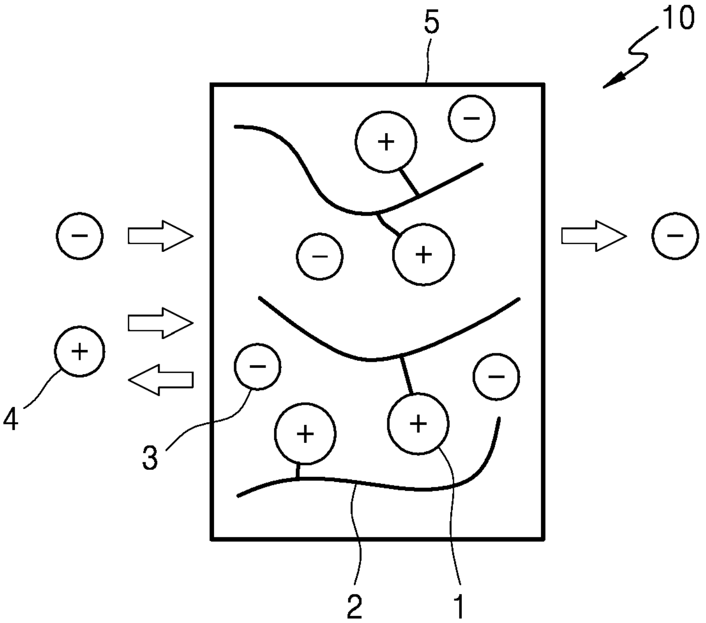


FIG. 2

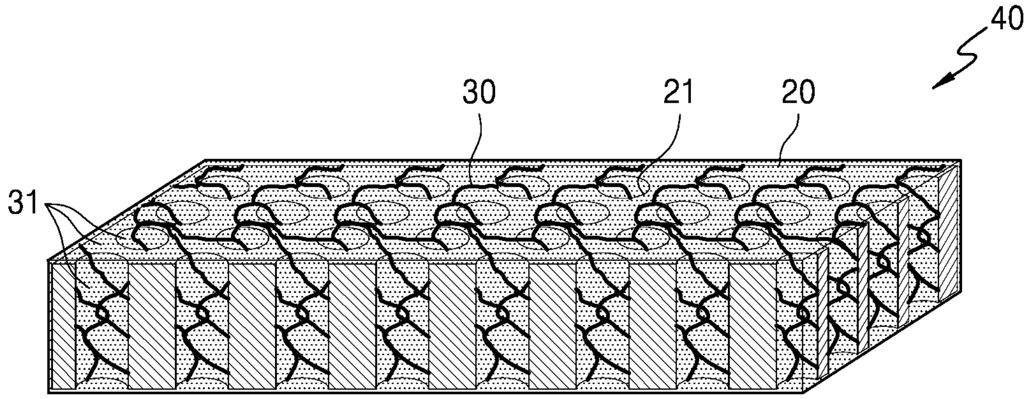

FIG. 3

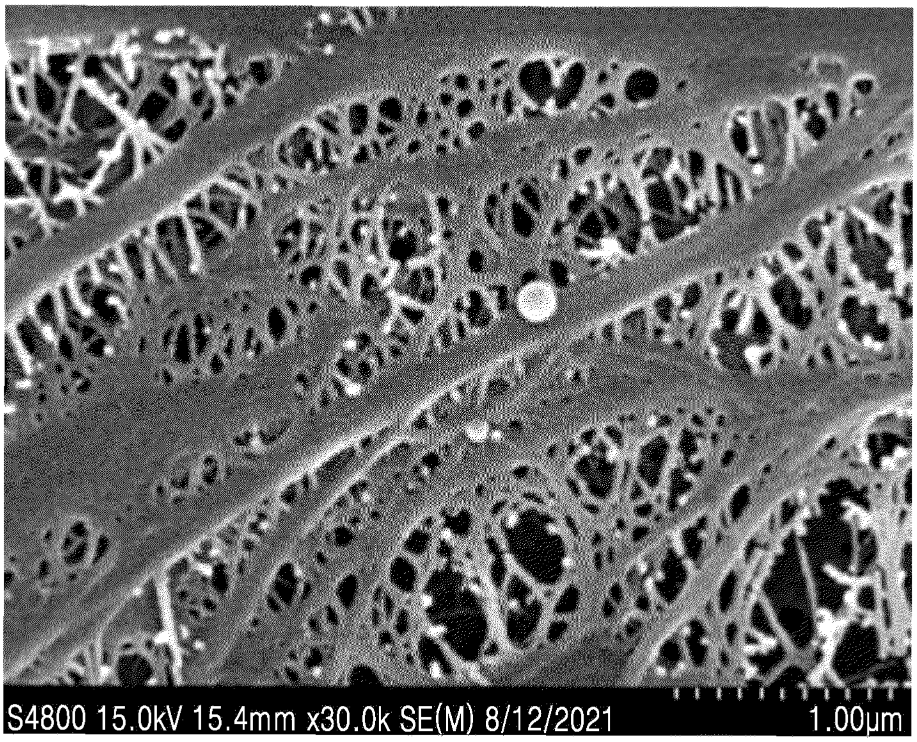

FIG. 4

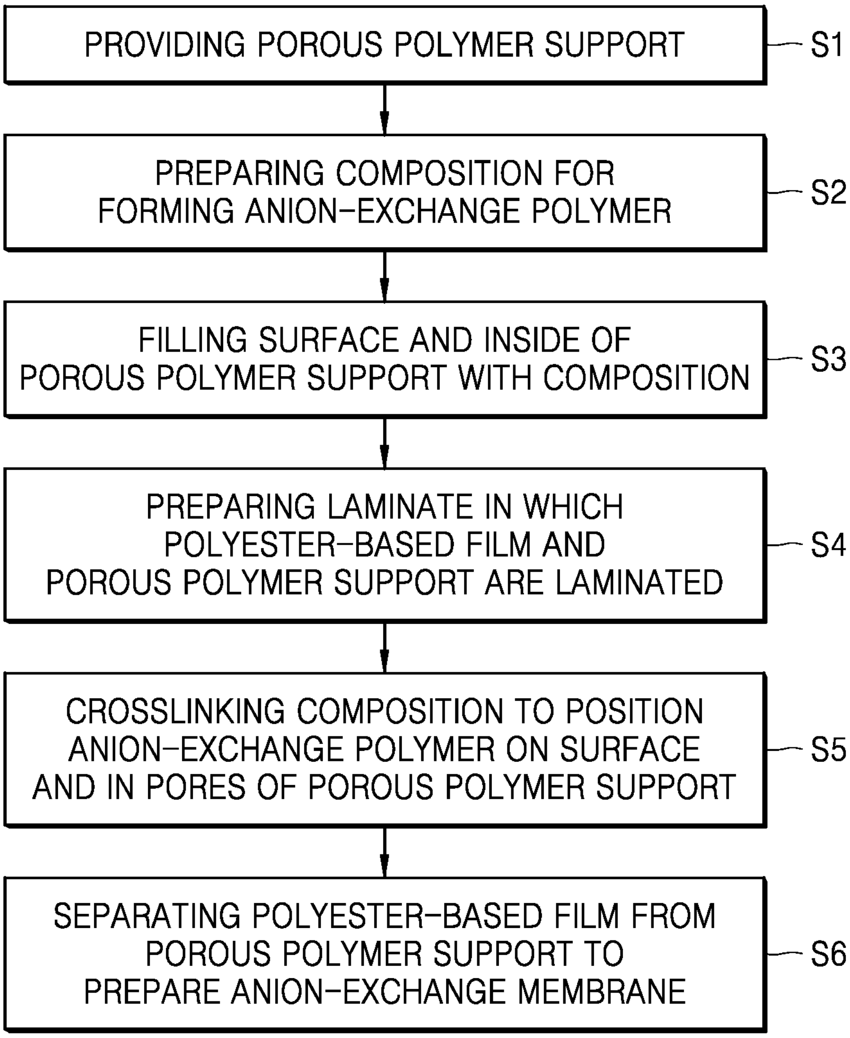
PROVIDING POROUS POLYMER SUPPORT
S1
PREPARING COMPOSITION FOR FORMING ANION-EXCHANGE POLYMER
S2
FILLING SURFACE AND INSIDE OF POROUS POLYMER SUPPORT WITH COMPOSITION
S3
PREPARING LAMINATE IN WHICH POLYESTER-BASED FILM AND POROUS POLYMER SUPPORT ARE LAMINATED
S4
CROSSLINKING COMPOSITION TO POSITION ANION-EXCHANGE POLYMER ON SURFACE AND IN PORES OF POROUS POLYMER SUPPORT
S5
SEPARATING POLYESTER-BASED FILM FROM POROUS POLYMER SUPPORT TO PREPARE ANION-EXCHANGE MEMBRANE
S6

## INTERNATIONAL SEARCH REPORT

International application No.
**PCT/KR2023/007175**

**A. CLASSIFICATION OF SUBJECT MATTER**

**C08J 5/22**(2006.01)i; **C08F 212/36**(2006.01)i; **C08F 8/30**(2006.01)i; **B01D 61/44**(2006.01)i; **B01D 61/42**(2006.01)i; **B01D 61/48**(2006.01)i; **H01M 8/1018**(2016.01)i; **H01M 8/1058**(2016.01)i; **H01M 8/1067**(2016.01)i; **H01M 8/1004**(2016.01)i

According to International Patent Classification (IPC) or to both national classification and IPC

**B. FIELDS SEARCHED**

Minimum documentation searched (classification system followed by classification symbols)

C08J 5/22(2006.01); B01D 71/78(2006.01); B01J 41/14(2006.01); C08F 12/34(2006.01); C08F 220/52(2006.01); C08F 226/06(2006.01); C08J 9/36(2006.01); C09D 125/18(2006.01); H01M 8/02(2006.01); H01M 8/10(2006.01); H01M 8/1044(2016.01); H01M 8/1058(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 음이온 교환막(anion exchange membrane), 음이온 교환 폴리머(anion exchange polymer), 가교성 모노머(crosslinkable monomer), 다공성 고분자 지지체(porous polymer support)

**C. DOCUMENTS CONSIDERED TO BE RELEVANT**

| Category* | Citation of document, with indication, where appropriate, of the relevant passages | Relevant to claim No. |
|---|---|---|
| Y | JP 6313454 B2 (FUJIFILM CORPORATION) 18 April 2018 (2018-04-18)<br>See claims 1, 6, 12 and 16-18; paragraphs [0002], [0055], [0065], [0082], [0086]-[0094], [0100]-[0101], [0106], [0108] and [0119]-[0120]; and tables 1-3. | 1-16 |
| Y | JP 2009-170350 A (TOKUYAMA CORP.) 30 July 2009 (2009-07-30)<br>See claim 1; and paragraphs [0030], [0033], [0058] and [0103]-[0104]. | 1-16 |
| Y | KR 10-2019-0126562 A (TORAY ADVANCED MATERIALS KOREA INC.) 12 November 2019 (2019-11-12)<br>See paragraphs [0066] and [0069]. | 15 |
| Y | JP 6227791 B2 (FUJIFILM CORPORATION) 08 November 2017 (2017-11-08)<br>See claims 1 and 8; and paragraphs [0025], [0029], [0050], [0055]-[0069], [0101] and [0103]. | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 September 2023** | **12 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/007175

C. DOCUMENTS CONSIDERED TO BE RELEVANT

| Category* | Citation of document, with indication, where appropriate, of the relevant passages | Relevant to claim No. |
|---|---|---|
| A | KR 10-2008-0086489 A (VIRGINIA TECH INTELLECTUAL PROPERTIES, INC.) 25 September 2008 (2008-09-25) See entire document. | 1-16 |
| A | WO 2015-058137 A2 (TONEN CHEMICAL CORPORATION) 23 April 2015 (2015-04-23) See entire document. | 1-16 |

Form PCT/ISA/210 (second sheet) (July 2022)

**INTERNATIONAL SEARCH REPORT**
**Information on patent family members**

International application No.
**PCT/KR2023/007175**

| Patent document cited in search report | Publication date (day/month/year) | Patent family member(s) | Publication date (day/month/year) |
|---|---|---|---|
| JP 6313454 B2 | 18 April 2018 | EP 3184558 A1 | 28 June 2017 |
| | | EP 3184558 A4 | 11 October 2017 |
| | | EP 3184558 B1 | 29 August 2018 |
| | | JP 2017-027595 A1 | 27 April 2017 |
| | | WO 2016-027595 A1 | 25 February 2016 |
| JP 2009-170350 A | 30 July 2009 | JP 5164149 B2 | 13 March 2013 |
| KR 10-2019-0126562 A | 12 November 2019 | CN 112135867 A | 25 December 2020 |
| | | EP 3789440 A1 | 10 March 2021 |
| | | JP 2021-521322 A | 26 August 2021 |
| | | JP 7208362 B2 | 18 January 2023 |
| | | KR 10-2133787 B1 | 15 July 2020 |
| | | US 2021-0237001 A1 | 05 August 2021 |
| | | WO 2019-212210 A1 | 07 November 2019 |
| JP 6227791 B2 | 08 November 2017 | US 09873116 B2 | 23 January 2018 |
| | | US 2017-0128931 A1 | 11 May 2017 |
| | | WO 2016-024560 A1 | 27 April 2017 |
| KR 10-2008-0086489 A | 25 September 2008 | CA 2633936 A1 | 21 June 2007 |
| | | CN 101374894 A | 25 February 2009 |
| | | EP 1961784 A1 | 27 August 2008 |
| | | JP 2009-069714 A1 | 28 May 2009 |
| | | TW 200732392 A | 01 September 2007 |
| | | US 2009-0234032 A1 | 17 September 2009 |
| | | WO 2007-069714 A1 | 21 June 2007 |
| WO 2015-058137 A2 | 23 April 2015 | WO 2015-058137 A3 | 11 June 2015 |

Form PCT/ISA/210 (patent family annex) (July 2022)